# EUROPEAN PATENT SPECIFICATION

(11) **EP 4 500 803 B1**
(45) Date of publication and mention of the grant of the patent: **15.07.2026**
(21) Application number: 22957792.9
(22) Date of filing: 09.09.2022
(51) Int. Cl.: H04L 27/00, H04W 74/08, H04W 16/14, H04W 24/08, H04W 36/00, H04W 36/08, H04W 36/30, H04W 74/00, H04W 76/14, H04W 88/04, H04W 92/18, H04L 1/1867, H04L 5/00, H04W 36/06, H04W 72/02, H04W 74/0808, H04W 74/0816

(54) **METHOD, DEVICE AND COMPUTER PROGRAM PRODUCT FOR WIRELESS COMMUNICATION**
VERFAHREN, VORRICHTUNG UND COMPUTERPROGRAMMPRODUKT ZUR DRAHTLOSEN KOMMUNIKATION
PROCÉDÉ, DISPOSITIF ET PRODUIT PROGRAMME D'ORDINATEUR POUR COMMUNICATION SANS FIL

(43) Date of publication of application: 05.02.2025
(73) Proprietor: ZTE Corporation, Shenzhen Guangdong 518057 (CN)
(72) Inventor: LUO, Wei, Shenzhen, Guangdong 518057 (CN); CHEN, Lin, Shenzhen, Guangdong 518057 (CN)
(74) Representative: Vossius & Partner Patentanwälte Rechtsanwälte mbB
(86) International application number: PCT/CN2022/118165
(87) International publication number: WO 2024/050823

(56) References cited:
- WO-A1-2022/032034
- WO-A1-2022/165851
- WO-A1-2022/165851
- US-A1- 2021 092 783
- US-A1- 2021 195 637
- US-A1- 2021 195 637
- US-A1- 2021 195 649
- US-A1- 2022 070 921
- US-A1- 2024 008 077

## Description

This document is directed generally to wireless communications, and in particular to 5^{th} generation (5G) or 6^{th} generation (6G) communications.

Sidelink is a unilateral wireless communication service between the communication terminals and may be applied to vehicle networking, which may need a large-scale system for wireless communications and information exchanges among vehicles, pedestrians, roadside equipments, and the internet in accordance with agreed communication protocols and data exchange standards. The vehicle networking communications enable the vehicles to gain driving safety, improve traffic efficiency, and acquire needed information. The vehicle networking communication may be categorized into three types as per the objects of the wireless communications: the communications between vehicles, i.e., vehicle-to-vehicle (V2V) communications; the communications between vehicles and the roadside equipment/network infrastructure, i.e., vehicle-to-infrastructure/vehicle-to-network (V2I/V2N) communications; and the communications between vehicles and pedestrians, i.e., vehicle-to-pedestrian (V2P) communications. These types of communications are collectively referred to as vehicle-to-everything (V2X) communications.
WO 2022/165851 A1 discloses that a terminal device can determine that a consistent LBT failure has been detected associated with the sidelink transmission.
US 2021/195637 A1 discloses a method including transmitting the COT indication signal based on a CBR value, a duration of the COT, and/or a number of LBT failures associated with LBTs performed at predetermine starting points.
WO 2022/032034 A1 discloses that a WTRU may ignore specific HARQ-based DTX when counting consecutive DTXs according to some predefined algorithm or pattern.

One aspect of the present disclosure relates to a wireless communication method. The invention is specified by the independent claims. Preferred embodiments are defined in the dependent claims. In the following description, although numerous features may be designated as optional, it is nevertheless acknowledged that all features comprised in the independent claims are not to be read as optional. In an embodiment, the wireless communication method includes: detecting, by a first wireless communication terminal, a consistent listen-before-talk, LBT, failure for a sidelink transmission; and performing, by the first wireless communication terminal, at least one of the following operations in response to the consistent LBT failure for the sidelink transmission being detected: reselecting a sidelink resource for the sidelink transmission; transmitting, to a second wireless communication terminal, a request of a channel occupancy time, COT, message; resetting one or more sidelink consecutive Discontinuous Transmission, DTX, counters for one or more destination IDs associated to at least one of a failed sidelink resource or a failed sidelink carrier; or resetting or restarting one or more radio resource control, RRC, reconfiguration related timers for one or more destination IDs associated to at least one of a failed sidelink resource or a failed sidelink carrier.

Another aspect of the present disclosure relates to a wireless communication method. In an embodiment, the wireless communication method includes: transmitting, by a first wireless communication terminal to a wireless communication node, first consistent listen-before-talk, LBT, failure indication information indicating a consistent LBT failure for a sidelink communication; wherein the first consistent LBT failure indication information is transmitted by at least one of a sidelink LBT failure Medium Access Control Control Element, MAC CE, or a Radio Resource Control, RRC, message.

Another aspect of the present disclosure relates to a wireless communication method. In an embodiment, the wireless communication method includes: transmitting, by a first wireless communication terminal to a second wireless communication terminal, second consistent listen-before-talk, LBT, failure indication information indicating a consistent LBT failure for a sidelink communication; wherein the second consistent LBT failure indication information is transmitted by at least one of: a sidelink LBT failure MAC CE, sidelink control information, SCI, or short control signaling.

Another aspect of the present disclosure relates to a wireless communication method. In an embodiment, the wireless communication method includes: receiving, by a second wireless communication terminal from a first wireless communication terminal, consistent LBT failure indication information indicating a consistent LBT failure for a sidelink communication; and performing, by the second wireless communication terminal, at least one of the following operations according to the consistent LBT failure indication information: reselecting a sidelink resource for a sidelink transmission; transmitting, to the first wireless communication terminal, cannel occupancy time, COT, information; resetting one or more sidelink consecutive Discontinuous Transmission, DTX, counters for one or more destination IDs associated to at least one of a failed sidelink resource or a failed sidelink carrier; or resetting or restarting one or more RRC reconfiguration related timers for one or more destination IDs associated to at least one of a failed sidelink resource or a failed sidelink carrier.

Another aspect of the present disclosure relates to a wireless communication terminal. In an embodiment, the wireless communication terminal includes a communication unit and a processor. The processor is configured to: detect a consistent listen-before-talk, LBT, failure for a sidelink transmission; and perform at least one of the following operations in response to the consistent LBT failure for the sidelink transmission being detected: reselecting a sidelink resource for the sidelink transmission; transmitting, to a second wireless communication terminal , a request of a channel occupancy time, COT, message; resetting one or more sidelink consecutive Discontinuous Transmission, DTX, counters for one or more destination IDs associated to at least one of a failed sidelink resource or a failed sidelink carrier ; or resetting or restarting one or more radio resource control, RRC, reconfiguration related timers for one or more destination IDs associated to at least one of a failed sidelink resource or a failed sidelink carrier.

Another aspect of the present disclosure relates to a wireless communication terminal. In an embodiment, the wireless communication terminal includes a communication unit and a processor. The processor is configured to: transmit, to a wireless communication node, first consistent listen-before-talk, LBT, failure indication information indicating a consistent LBT failure for a sidelink communication; wherein the first consistent LBT failure indication information is transmitted by at least one of a sidelink LBT failure Medium Access Control Control Element, MAC CE, or a Radio Resource Control, RRC, message.

Another aspect of the present disclosure relates to a wireless communication terminal. In an embodiment, the wireless communication terminal includes a communication unit and a processor. The processor is configured to: transmit, to a second wireless communication terminal, second consistent listen-before-talk, LBT, failure indication information indicating a consistent LBT failure for a sidelink communication; wherein the second consistent LBT failure indication information is transmitted by at least one of: a sidelink LBT failure MAC CE, sidelink control information, SCI, or short control signaling.

Another aspect of the present disclosure relates to a wireless communication terminal. In an embodiment, the wireless communication terminal includes a communication unit and a processor. The processor is configured to: receive, from a first wireless communication terminal, consistent LBT failure indication information indicating a consistent LBT failure for a sidelink communication; and perform at least one of the following operations according to the consistent LBT failure indication information: reselecting a sidelink resource for a sidelink transmission; transmitting, to the first wireless communication terminal, cannel occupancy time, COT, information; resetting one or more sidelink consecutive Discontinuous Transmission, DTX, counters for one or more destination IDs associated to at least one of a failed sidelink resource or a failed sidelink carrier; or resetting or restarting one or more RRC reconfiguration related timers for one or more destination IDs associated to at least one of a failed sidelink resource or a failed sidelink carrier.

Various embodiments may preferably implement the following features:
Preferably, the consistent LBT failure may be detected on a carrier for the sidelink transmission. In some embodiments, the consistent LBT failure may be detected on the sidelink resource or the carrier for the sidelink transmission.

Preferably, the consistent LBT failure may be detected or determined in response to the times of LBT failure reaches a certain value or limit during a certain period.

Preferably, the term consistent may be used to describe a situation keeps happening in a similar way. Preferably, the consistent LBT failure may indicate that the LBT procedure keeps failing or the LBT failure keeps happening.

Preferably, the sidelink resource comprises at least one of: a sidelink resource pool, a sidelink resource block, RB, set, or a sidelink bandwidth part, BWP.

Preferably, the failed sidelink resource comprises at least one of: a sidelink resource on which the consistent LBT failure is detected, or a sidelink resource for which the consistent LBT failure have been triggered.

Preferably, the failed sidelink carrier comprises at least one of: a sidelink carrier on which the consistent LBT failure is detected, or a sidelink resource for which the consistent LBT failure have been triggered.

Preferably, reselecting the sidelink resource comprises at least one of: switching a sidelink resource pool from a current or source sidelink resource pool to a reselected or target sidelink resource pool; or switching a sidelink RB set from a current or source sidelink RB set to a reselected or target sidelink RB set.

Preferably, the first consistent LBT failure indication information comprises at least one of: one or more indices for one or more sidelink resource pools for which the consistent LBT failure is detected or has been triggered; one or more indices for one or more sidelink RB sets for which the consistent LBT failure is detected or has been triggered; an indication of the consistent LBT failure for the sidelink communication being detected for each destination ID; or an indication to indicate the consistent LBT failure for the sidelink communication being detected.

Preferably, the sidelink LBT failure MAC CE comprises a plurality of indicating fields, and an indicating field is set to a first value in response to the consistent LBT failure on a corresponding sidelink resource being detected, and the indicating field is set to a second value in response to the consistent LBT failure on a corresponding sidelink resource not being detected.

Preferably, the sidelink LBT failure MAC CE comprises: N octets comprising 8*N X-fields, wherein N is an integer.

Preferably, an i-th X-field is set to a value of 1 in response to a consistent LBT failure being triggered and for a sidelink resource pool index i, and the i-th X-field is set to a value of 0 in response to the consistent LBT failure not being triggered or detected or being cancelled.

Preferably, an i-th X-field is set to a value of 1 in response to a consistent LBT failure being triggered and for a BWP index i, and the i-th X-field is set to a value of 0 in response to the consistent LBT failure not being triggered or detected or being cancelled.

Preferably, an i-th X-field is set to a value of 1 in response to a consistent LBT failure being triggered and for an RB set index i, and the i-th X-field is set to a value of 0 in response to the consistent LBT failure not being triggered or detected or being cancelled.

Preferably, the sidelink LBT failure MAC CE comprises a logical channel identification, LCID, in an MAC subheader indicating the consistent LBT failure for the sidelink communication, and the sidelink LBT failure MAC CE comprises a null payload.

Preferably, the sidelink LBT failure MAC CE comprises a logical channel identification, LCID, in an MAC subheader indicating the consistent LBT failure for the sidelink communication, and the sidelink LBT failure MAC CE comprises one or more indices for one or more failed sidelink resources.

Preferably, the SCI comprises one or more indices for one or more failed sidelink resources.

Preferably, the first wireless communication terminal transmits the second consistent LBT failure indication information by the short control signaling without evaluating an availability of a channel by one or more channel access procedures for performing transmissions in advance.

Preferably, the first wireless communication terminal transmits information of a reselected sidelink resource to the second wireless communication terminal.

Preferably, the reselected sidelink resource is obtained by a reselection of a sidelink resource performed by the first wireless communication terminal in response to the consistent LBT failure for the sidelink transmission being detected.

Preferably, the reselected sidelink resource is transmitted by the second consistent LBT failure indication information of the sidelink communication to the second wireless communication terminal.

Preferably, the reselected sidelink resource is transmitted by the SCI, the sidelink MAC CE, or a sidelink RRC message.

Preferably, the COT information is transmitted by SCI enabling a COT sharing function.

Preferably, the second wireless communication terminal receives information of reselected sidelink resource from the first wireless communication terminal.

Preferably, the reselected sidelink resource is received via the consistent LBT failure indication information from the first wireless communication terminal.

Preferably, the reselected sidelink resource is received via SCI or a sidelink MAC CE or a sidelink RRC message.

The present disclosure relates to a computer program product comprising a computer-readable program medium code stored thereupon, the code, when executed by a processor, causing the processor to implement a wireless communication method recited in any one of foregoing methods.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.
FIG. 1 shows a schematic diagram of a sidelink communication system according to an embodiment of the present disclosure.
FIG. 2 shows a schematic diagram of a wireless network terminal according to an embodiment of the present disclosure.
FIGs. 3 to 6 show flowcharts of wireless communication methods according to embodiments of the present disclosure.

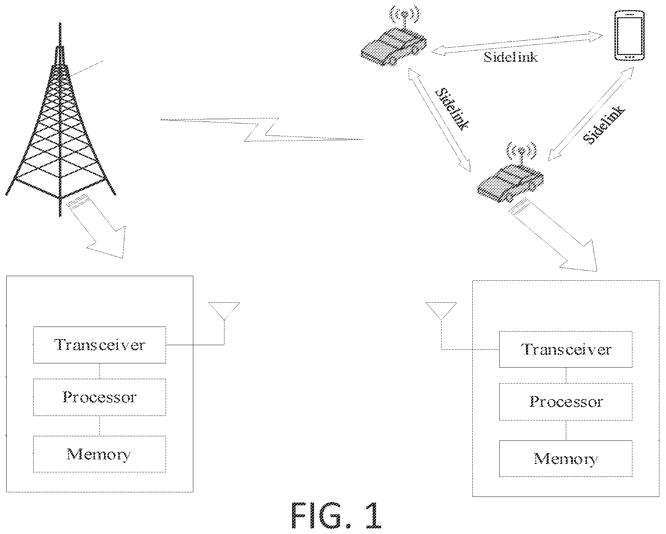

In some embodiments, in the V2X communications of the 3rd Generation Partnership Project (3GPP), the sidelink-based V2X communication method between user equipments may be used, in which the traffic data is directly transmitted from a source user equipment to a destination user equipment via an air interface without forwarding by the base station and the core network (see FIG. 1). This V2X communication is referred to as PC5-based V2X communication or V2X sidelink communication.

With the technology advancement and development of the automation industry, the scenarios for V2X communications are further diversified and require higher performance. The advanced V2X services include vehicle platooning, extended sensors, advanced driving (semi-automated driving and full-automated driving), and remote driving. The performance requirements may include supporting data packets with the size of 50 to 12000 bytes, the transmission rate with 2 to 50 messages per second, the maximum end-to-end delay of 3 to 500 milliseconds, the reliability of 90% to 99.999%, the data rate of 0.5 to 1000 Mbps, and the transmission range of 50 to 1000 meters.

In some embodiments, NR (new radio) Radio Access operations with shared spectrum channel access can operate in different modes where either PCell (primary cell), PSCell (Primary Secondary Cell), or SCells (Secondary Cells) can be in shared spectrum and an SCell may or may not be configured with uplink configurations. In both channel access modes, the gNB (gNodeB) and the UE may perform the Listen-Before-Talk (LBT) procedure before performing a transmission on a cell configured with shared spectrum channel access. When the LBT is performed, the transmitter listens to or senses the channel to determine whether the channel is free or busy and performs the transmission only if the channel is free.

Some embodiments of this disclosure are directed to methods, systems, and devices related to wireless communication, and more specifically, to provide solutions for sidelink communications when consistent LBT failure happens on an unlicensed carrier (e.g., shared spectrum).

### Embodiment 1: LBT detection

In some embodiments, the first user device (e.g., the first UE) may determine an LBT success or an LBT failure based on the LBT procedure, i.e., whether the LBT procedure results in an LBT success or an LBT failure. The first user device may transmit the sidelink signal to a second user device (e.g., the second UE) in response to determining a LBT success; and may not transmit the sidelink signal in response to determining a LBT failure.

In some embodiments, the first user device may determine whether a sidelink consistent LBT failure (e.g., a consistent LBT failure for a sidelink communication) is present according to the LBT procedure. In some embodiments, the sidelink consistent LBT failure may be a consistent LBT failure detected on a certain sidelink resource and/or a certain carrier for a sidelink communication. In some embodiments, the sidelink resource comprises at least one of: a sidelink resource pool, a sidelink resource block, RB, set, or a sidelink bandwidth part, BWP.

In various embodiments, the first user device may determine a sidelink consistent LBT failure by counting LBT failures over multiple LBT procedures or iterations of an LBT procedure. For example, the user device may be configured with a sidelink maximum LBT failure count (e.g., *SL-Ibt-FailureMaxCount)* for the sidelink consistent LBT failure detection, a sidelink failure detection timer (e.g., *SL-Ibt-FailureDetectionTimer)* for the sidelink consistent LBT failure detection, and a sidelink LBT counter (e.g., *SL-LBT COUNTER)* for counting LBT failures, which may initially be set to zero. Under the condition that the first user device detects a LBT failure for an LBT procedure, the first user device may start or restart the sidelink failure detection timer. In addition, the first user device may increment the sidelink LBT counter by one. Subsequently, the first user device may compare a current value of the sidelink LBT counter with the sidelink maximum LBT failure count. If the current value is greater than or equal to the sidelink maximum LBT failure count, then the first user device may detect a sidelink consistent LBT failure. In some embodiments, the first user device may use the sidelink failure detection timer for the counting. For example, the first user device may count during the time duration measured by the sidelink failure detection timer. That is, the first user device may determine whether a sidelink consistent LBT failure occurs based on the sidelink LBT counter counting during a time duration when the sidelink LBT failure detection timer is running (not expired). In response to the sidelink LBT failure detection timer expiring, or in the situation that the sidelink LBT failure detection timer or the sidelink maximum LBT failure count is reconfigured by the MAC (medium access control) layer (or another upper layer), the user device may reset the sidelink LBT counter to zero or another initial value.

In some embodiments, the PHY (physical) layer of the first user device may perform the LBT procedure, and/or determine whether the LBT procedure is a success or failure. If the PHY layer determines a LBT failure, then the PHY layer may send a sidelink failure indication to the MAC layer that indicates the LBT failure detected by the PHY layer. Also, the MAC layer may be configured with the sidelink maximum LBT failure count, the sidelink failure detection timer, and the sidelink LBT counter, and determine or detect sidelink consistent LBT failures in response to receiving the sidelink failure indications as described above.

In accordance with some embodiments of the present disclosure, a communication method may include determining, with the first user device, a sidelink consistent LBT failure according to the LBT procedure.

### Embodiment 2: consistent LBT failure being detected

In some embodiments, in response to a sidelink consistent LBT failure is determined, the first user device may trigger a sidelink resource re-selection. In some embodiments, the sidelink resource may include at least one of a sidelink bandwidth part (BWP), a sidelink resource pool, or a sidelink RB (resource block) set. In some embodiments, triggering the sidelink resource re-selection may include performing at least one of:
switching an active bandwidth part from one sidelink bandwidth part to another sidelink bandwidth part;
switching a sidelink transmission resource pool from one sidelink resource pool to another sidelink resource pool; or
switching a sidelink RB set from one sidelink RB set to another sidelink RB set.

In accordance with some embodiments of the present disclosure, a communication method may include: in response to the sidelink consistent LBT failure is determined, triggering a sidelink resource re-selection.

In accordance with some embodiments of the present disclosure, the communication method may further include: in response to triggering the sidelink resource re-selection, switching a sidelink transmission resource pool from one sidelink resource pool to another sidelink resource pool and/or switch a sidelink RB set from one sidelink RB set to another sidelink RB set.

### Embodiment 3: COT (Channel Occupancy Time) request transmission

In some embodiments, when the first user device detects a sidelink consistent LBT failure in the unlicensed carrier based on the LBT procedure, the first user device may need a peer user device to provide Channel Occupancy Time (COT). Accordingly, the first user device may send the request of COT message to the second user device.

In some embodiments, the Channel Occupancy Time refers to the total time for an eNB (eNodeB), gNB, or UE and another eNB, gNB, or UE sharing the channel occupancy perform transmission(s) on a channel after the eNB, gNB, or UE performs the corresponding channel access procedures. For determining a Channel Occupancy Time, if a transmission gap is less than or equal to 25 µs, the gap duration is counted in the channel occupancy time. A channel occupancy time can be shared for transmission between an eNB or gNB and the corresponding UE(s).

In some embodiments, the second user device may indicate a shared period for the first user device to perform the sidelink transmission via the COT message. That is, the COT message may include the information of shared period for the first user device to perform the sidelink transmission.

In some embodiments, when the first user device detects a sidelink consistent LBT failure in the unlicensed carrier based on the LBT procedure, the first user device may change the sidelink resource for the sidelink transmission from a failed sidelink BWP, sidelink resource pool or sidelink RB set to a new (or reselected) sidelink BWP, sidelink resource pool or sidelink RB set. Then, the first user device may send the index of new (or reselected) sidelink BWP, sidelink resource pool or sidelink RB set to the second user device.

In some embodiments, the information of the index of new sidelink BWP, or sidelink resource pool or sidelink RB set is carried in the sidelink consistent LBT failure indication information.

In some embodiments, the information of the index of sidelink BWP, or sidelink resource pool or sidelink RB set is carried in a sidelink control information (SCI) or a dedicated sidelink MAC CE (control element).

### Embodiment 4: content of consistent LBT failure indication

In some embodiments, in response to a sidelink consistent LBT failure is determined, the first user device may generate a sidelink LBT failure MAC CE that includes, or is identified by, a MAC subheader that includes a logical channel identification (LCID). The first user device may generate a RRC (radio resource control) message. In some embodiments, the sidelink LBT failure MAC CE or RRC message may include information as described below.

In various embodiments, the first user device may send sidelink consistent LBT failure indication information that indicates the sidelink consistent LBT failure to a wireless access node (e.g., a gNB or a base station) or a second user device.

In accordance with some embodiments of the present disclosure, a communication method may include: in response to the sidelink consistent LBT failure is determined according to the LBT procedure, generating, with the first user device, a sidelink LBT failure MAC control element (CE) or a RRC message; and transmitting, with the first user device, sidelink consistent LBT failure indication information that indicates the sidelink consistent LBT failure to a wireless access node.

In some embodiments, the sidelink LBT failure MAC CE or the RRC message may include:
a list of sidelink resource pool for which sidelink consistent LBT failures is triggered, wherein each index in the list identify a sidelink resource pool; or
a list of BWP indices for which sidelink consistent LBT failures is triggered; or
a list of RB set indices for which sidelink consistent LBT failures is triggered;
an indication (e.g., one or more indicating fields) of whether sidelink consistent LBT failures happen for each destination ID; or
an indication to indicate sidelink consistent LBT failures happens.

In some embodiments, the sidelink LBT failure MAC CE may include: N octets including 8*N X-fields (e.g., indicating fields), in which N is a positive integer.

In some embodiments, an i-th X-field is set to a first value (e.g., 1) in response to a consistent LBT failure being triggered for a sidelink resource pool index i (e.g., an integer), and the i-th X-field is set to a second value (e.g., 0) in response to the consistent LBT failure not being triggered.

In some embodiments, an i-th X-field is set to a first value (e.g., 1) in response to a consistent LBT failure being triggered for a BWP index i, and the i-th X-field is set to a second value (e.g., 0) in response to the consistent LBT failure not being triggered.

In some embodiments, an i-th X-field is set to a first value (e.g., 1) in response to a consistent LBT failure being triggered for an RB set i, and the i-th X-field is set to a second value (e.g., 0) in response to the consistent LBT failure not being triggered.

### Embodiment 5: consistent LBT failure indication being sent to peer UE

In various embodiments, when the first user device detects a sidelink consistent LBT failure in the unlicensed carrier based on the LBT procedure, the first user device may send sidelink consistent LBT failure indication information that indicates the sidelink consistent LBT failure to a second user device.

In some embodiments, the sidelink consistent LBT failure indication information is carried by a sidelink LBT failure MAC CE, which is identified by a MAC subheader that includes a logical channel identification (LCID), and the MAC CE has a fixed size of zero bits (e.g., in the payload) (e.g., the MAC CE has a null payload). When the second user device receives this sidelink consistent LBT failure indication information, it can determine the sidelink consistent LBT failure happens on the RB set or sidelink resource pool associated to the sidelink consistent LBT failure indication MAC CE.

In some embodiments, the sidelink consistent LBT failure indication information is carried by a sidelink LBT failure MAC CE, which is identified by a MAC subheader that includes a logical channel identification (LCID), and the MAC CE include the index of RB sets or sidelink resource pool. When the second user device receives this sidelink consistent LBT failure indication information, it can determine the sidelink consistent LBT failure happens on the RB set or sidelink resource pool indicated by the index included in the sidelink consistent LBT failure indication MAC CE.

In some embodiments, the sidelink consistent LBT failure indication information is carried by sidelink control information (SCI). In some embodiments, the SCI includes the index of an RB set or a sidelink resource pool. When the second user device receives this sidelink consistent LBT failure indication information, it can determine the sidelink consistent LBT failure happens on the RB set or sidelink resource pool indicated by the index included in the sidelink consistent LBT failure indication MAC CE.

In some embodiments, the sidelink consistent LBT failure indication information is sent by short control signaling. In some embodiments, the first user device transmits the short control signaling without sensing the channel for the presence of other signals in the unlicensed carrier for transmitting the short control signaling in advanced. In some embodiments, the application of the short control signaling is constrained as follows:
within an observation period of 50ms, the number of Short Control Signaling Transmissions performed by the equipment is equal to or less than 50; and
the total duration of Short Control Signaling Transmissions performed by the equipment is less than 2500µs within said observation period.

In some embodiments, the first wireless communication terminal transmits the second consistent LBT failure indication information by the short control signaling without evaluating an availability of a channel by one or more channel access procedures for performing transmissions in advance.

In some embodiments, a channel access procedure is a procedure based on sensing that evaluates the availability of a channel for performing transmissions. The basic unit for sensing is a sensing slot with a duration *Tₛₗ = 9us. Tₛₗ* is considered to be idle if an eNB/gNB or a UE senses the channel during the sensing slot duration, and determines that the detected power for at least *4us* within the sensing slot duration is less than energy detection threshold *X*_{Thresh}. Otherwise, the sensing slot duration *Tₛₗ* is considered to be busy.

In accordance with some embodiments of the present disclosure, a communication method may include: detecting, with the first user device, a sidelink consistent LBT failure in the unlicensed carrier based on the LBT procedure; and transmitting, with the first user device, sidelink consistent LBT failure indication information that indicates the sidelink consistent LBT failure to the second user device.

### Embodiment 6: receiving LBT failure indication

In some approaches, when the first user device wants to communicate with the second user device in the unicast mode, the first and second user devices may first establish a PC5-RRC connection (also called a PC5 link) with each other. Since the first user device may communicate with multiple user devices (e.g., for different types of services), the first user device may establish multiple PC5-RRC connections with the multiple user devices. The first user device may use a destination ID to uniquely identify a PC5-RRC connection established by itself with another user device. Upon the first and second user devices establishing a PC5-RRC connection, they can exchange various information, including UE capability information, RRC configuration messages including measuring configuration information, or bearer configuration information, etc.

Additionally, the first user device may detect a radio link failure (RLF) for a PC5-RRC connection it established with the second user device. Upon the detection of an RLF, the first user device may release the PC5-RRC connection, which may include releasing DRBs for the PC5-RRC connection and/or discarding NR sidelink communication configuration information for the PC5-RRC connection.

In various embodiments, the first user device may determine a RLF for a PC5-RRC connection in response to detecting that the number of consecutive hybrid automatic repeat request (HARQ) discontinuous transmissions (DTXs) has reached a maximum number of consecutive HARQ DTXs (e.g., *sl-maxNumConsecutiveDTX).* In various embodiments, a user device may detect a number of consecutive resource configured with a physical sidelink feedback channel (PSFCH) that does not receive a HARQ feedback message. The first user device may keep track of a current number of consecutive DTXs (e.g., *numConsecutiveDTX).* If the current number reaches or exceeds the maximum number of consecutive HARQ DTXs, then the first user device may determine an RLF is detected. Accordingly, in various embodiments, the first user device may determine if a PSFCH reception is absent on a PSFCH reception occasion. If so, then the first user device may increment the current count (e.g., *numConsecutiveDTX)* by one. The first user device may compare whether the current count reaches the maximum number of consecutive HARQ DTXs. If so, the first user device may detect an RLF (also called a HARQ-based sidelink RLF) for the PC5-RRC connection. Additionally, in some embodiments, the MAC layer keeps the track of the current count, and determines whether an RLF is occurred by comparing the current count with the maximum number of consecutive HARQ DTXs. If the MAC layer detects an RLF, the MAC layer may notify the RRC layer.

In some situations that the first and second user devices communicate with each other on an unlicensed carrier, if the second user device performs an LBT procedure and the result is an LBT failure, then the second user device may be unable to send HARQ feedback to the first user device. In the situations that the first and second user devices communicate with each other on a licensed carrier, consecutive HARQ DTXs may occur due to the first and second user devices moving away from each other. In the situations that the first and second user devices communicate with each other on an unlicensed carrier, consecutive HARQ DTXs occur due to the first and second user devices moving away from each other, and due to it is easier to reach the maximum number of consecutive HARQ DTXs for a specific destination. However, if the maximum number of consecutive HARQ DTXs is reached due to the consistent LBT failure, the first and second user devices may not want to release the PC5-RRC connection for such a destination.

In various embodiments, the first user device may be configured with a maximum number of consecutive HARQ DTXs in order to detect RLFs. In some embodiments, the first user device may receive the maximum number of consecutive HARQ DTXs from the wireless access node. In other embodiments, the first user device may be preconfigured with the maximum number of consecutive HARQ DTXs. In some embodiments, the first user device maintains a count (e.g., *numConsecutiveDTX),* the first user device may increment the current count (e.g., *numConsecutiveDTX)* by one if the first user device determines that a PSFCH reception is absent on a PSFCH reception occasion. If the first user device receives sidelink consistent LBT failure indication information that indicates the sidelink consistent LBT failure from a second user device, the first user device can know that the consecutive HARQ DTXs is occurred due to the consistent LBT failure and not due to the second user device moving away. Accordingly, in order to avoid releasing the PC5-RRC connection for the destination, when the first user device receives the sidelink consistent LBT failure indication information that indicates the sidelink consistent LBT failure from the second user device, the first user device may reset the sidelink Consecutive DTXs counter (e.g., *numConsecutiveDTX)* to zero or another initial value.

After that, the first user device may continue to compare whether the current count reaches the maximum number of consecutive HARQ DTXs. If so, then the first user device may determine that an RLF (also called a HARQ-based sidelink RLF) is detected. Additionally, in some embodiments, the MAC layer keeps track of the current count, and determines whether a RLF occurrs by comparing the current count with the maximum number of consecutive HARQ DTXs. If the MAC layer detects an RLF, the MAC layer may notify the RRC layer.

### Embodiment 6-1: detecting LBT failure indication

Similar to Embodiment 6, if the first user device detects a sidelink consistent LBT failure according to the LBT procedure for a sidelink resource pool, even if the first user device does not receive the sidelink consistent LBT failure indication information from another user device, it may consider the sidelink consistent LBT failure may be detected by another user device which performs the LBT procedure on this sidelink resource pool. In some embodiments, a user device can be configured with multiple sidelink Consecutive DTXs counters, and each of which is associated to one PC5-RRC connection and a destination ID. Thus, in order to avoid releasing the PC5-RRC connection for the destination, if the first user device detects a sidelink consistent LBT failure according to the LBT procedure for a sidelink resource pool, it can reset all the sidelink Consecutive DTXs counter(s) (e.g., *numConsecutiveDTX)* to zero or another initial value for all the destination ID(s) associated to the sidelink resource pool on which the sidelink consistent LBT failure is detected.

In some embodiments, if the first user device detects a sidelink consistent LBT failure according to the LBT procedure for a sidelink RB set, even if the first user device does not receive the sidelink consistent LBT failure indication information from another user device, it may consider the sidelink consistent LBT failure may be detected by another user device which performs the LBT procedure on this sidelink RB set. In some embodiments, a user device can be configured with multiple sidelink Consecutive DTXs counters, and each of which is associated to one PC5-RRC connection and a destination ID. Thus, in order to avoid releasing the PC5-RRC connection for the destination, if the first user device detects a sidelink consistent LBT failure according to the LBT procedure for a sidelink RB set, it can reset all the sidelink Consecutive DTXs counter(s) (e.g., *numConsecutiveDTX)* to zero or another initial value for all the destination ID(s) associated to the sidelink RB set on which the sidelink consistent LBT failure is detected.

Similarly, if the first user device detects a sidelink consistent LBT failure according to the LBT procedure for a sidelink BWP/carrier, it can reset all the sidelink Consecutive DTXs counter(s) (e.g., *numConsecutiveDTX)* to zero or another initial value for all the destination ID(s) associated to the sidelink BWP/carrier on which the sidelink consistent LBT failure is detected.

### Embodiment 7: receiving LBT failure indication

For an example, a first user may detect a RLF for a PC5-RRC connection between the first and second user devices. The first user device may determine to perform a sidelink RRC reconfiguration procedure. Correspondingly, the first user device may transmit a sidelink RRC reconfiguration message to the second user device. In response to sending the RRC reconfiguration sidelink message, the first user device may also start a timer Tx (e.g., the timer T400 or another timer) for the associate destination ID. The first user device may stop the timer Tx for the associate destination ID if the first user device receives a sidelink RRC reconfiguration completed message or a sidelink RRC reconfiguration failure message from the second user device before the timer Tx expires.

If the timer Tx is expired for a specific destination, the first user device may determine the sidelink RLF is detected for this destination.

However, if the sidelink consistent LBT failure happens for a second user device, it may not send a sidelink RRC reconfiguration completed message or a sidelink RRC reconfiguration failure message, but send the sidelink consistent LBT failure indication information. Thus, in various embodiments, when the first user device receives the sidelink consistent LBT failure indication information from the second user device, it can restart a timer Tx (e.g., the timer T400 or another timer) for the associate destination ID, or it can reset the timer Tx to zero or another initial value for the associate destination ID. By this way, the first user device can avoid releasing the PC5-RRC connection for the destination ID associated with a second user device not moving away.

### Embodiment 7-1: receiving LBT failure indication

Similar to Embodiment 7, if the first user device detects a sidelink consistent LBT failure according to the LBT procedure for a sidelink resource pool, even it does not receive sidelink consistent LBT failure indication information from another user device, it may determine that the sidelink consistent LBT failure may be detected by another user device which performs the LBT procedure on this sidelink resource pool. In some embodiments, a user device can be configured with multiple sidelink Consecutive DTXs counters, and each of which is associated to one PC5-RRC connection and a destination ID. In order to avoid releasing the PC5-RRC connection for the destination ID, if the first user device detects a sidelink consistent LBT failure according to the LBT procedure for a sidelink resource pool, it can restart all the timer Tx(s) (e.g., the timer T400 or other timer) for all the destination ID(s) associated to the sidelink resource pool on which the sidelink consistent LBT failure is detected; or it can reset all the timer Tx(s) to zero or another initial value for the destination ID(s) associated to the sidelink resource pool on which the sidelink consistent LBT failure is detected.

Similarly, if the first user device detects a sidelink consistent LBT failure according to the LBT procedure for a sidelink RB set, BWP, or carrier, it can restart all the timer Tx(s) (e.g., the timer T400 or other timer) for all the destination ID(s) associated to the sidelink RB set, BWP, or carrier on which the sidelink consistent LBT failure is detected; or it can reset all the timer Tx(s) to zero or another initial value for the destination ID(s) associated to the sidelink RB set, BWP, or carrier on which the sidelink consistent LBT failure is detected.

### Embodiment 8: receiving LBT failure indication

In various embodiments, the first user device may be configured with multiple sidelink bandwidth parts or sidelink resource pools or sidelink RB sets. When the second user device receives sidelink consistent LBT failure indication information that indicates the sidelink consistent LBT failure from a first user device, the second user device determine the sidelink consistent LBT failure happens for the associated sidelink resource pool(s) or RB set(s). Accordingly, the second user may trigger a sidelink resource re-selection.

In some embodiments, in triggering the sidelink resource re-selection, the second user device may perform at least one of: switching an active bandwidth part from one sidelink bandwidth part to another sidelink bandwidth part; switching a sidelink transmission resource pool from one sidelink resource pool to another sidelink resource pool; or switching a sidelink RB set from one sidelink RB set to another sidelink RB set.

In accordance with some embodiments of the present disclosure, a communication method may include: in response to the sidelink consistent LBT failure being detected, triggering a sidelink resource re-selection.

In accordance with some embodiments of the present disclosure, the communication method may further include: in response to triggering the sidelink resource re-selection, switching a sidelink transmission resource pool from one sidelink resource pool to another sidelink resource pool; or switching a sidelink RB set from one sidelink RB set to another sidelink RB set.

### Embodiment 9: receiving LBT failure indication

In various embodiments, the first user device may be configured with multiple sideink bandwidth parts or sidelink resource pools or sidelink RB sets. When the second user device receives sidelink consistent LBT failure indication information that indicates the sidelink consistent LBT failure from the first user device, the second user device determines the sidelink consistent LBT failure happens for the associated sidelink resource pool(s) or RB set(s). Accordingly, the second user device may send Channel Occupancy Time (COT) information to the first user device. The Channel Occupancy Time (COT) information may be carried in the SCI. In an embodiment, the SCI may enable a COT sharing function (e.g., the field of "COT sharing indication" in the SCI is set to '1').

In various embodiments, the total Channel Occupancy Time of the sidelink transmission(s) may be obtained by the channel access procedure for the second user device.

In accordance with some embodiments of the present disclosure, a wireless communication method includes: when the first user device detects a sidelink consistent LBT failure in the unlicensed carrier according to the LBT procedure, it may perform at least one of following actions:: triggering a sidelink resource re-selection, including switching a sidelink transmission resource pool from one sidelink resource pool to another sidelink resource pool; or switching a sidelink RB set from one sidelink RB set to another sidelink RB set; sending the request of COT message to the second user device; and/or sending the new index of sidelink BWP, or sidelink resource pool or sidelink RB set which indicate the target resource used to send sidelink messages (reference can be made to Embodiments 2 and 3).

In accordance with some embodiments of the present disclosure, if the first user device detects a sidelink consistent LBT failure according to the LBT procedure for a sidelink resource pool, RB set, BWP, or carrier, it can reset all the sidelink Consecutive DTXs counter(s) (e.g., *numConsecutiveDTX)* to zero or another initial value for all the destination ID(s) associated to the sidelink resource pool, RB set, BWP, or carrier on which the sidelink consistent LBT failure is detected (reference can be made to Embodiment 6-1).

In accordance with some embodiments of the present disclosure, if the first user device detects a sidelink consistent LBT failure according to the LBT procedure for a sidelink resource pool, RB set, BWP, or carrier, it can restart all the timer Tx(s) (e.g., the timer T400 or other timer) for all the destination ID(s) associated to the sidelink resource pool, RB set, BWP, or carrier on which the sidelink consistent LBT failure is detected; or it can reset all the timer Tx(s) to zero or another initial value for the destination ID(s) associated to the sidelink resource pool, RB set, BWP, or carrier on which the sidelink consistent LBT failure is detected (reference can be made to Embodiment 7-1).

In accordance with some embodiments of the present disclosure, the sidelink consistent LBT failure indication information may be sent by sidelink LBT failure MAC control element (CE), an RRC message, or short control signaling. In an embodiment, the content and format of the sidelink LBT failure MAC control element (CE) or the RRC message may be ascertained by referring to Embodiments 4 and 5. In an embodiment, the short control signaling can be sent without sensing the channel for the presence of other signals in the unlicensed carrier (see Embodiment 5).

In accordance with some embodiments of the present disclosure, when the second user device receives the sidelink consistent LBT failure indication information that indicates the sidelink consistent LBT failure from a first user device, it may trigger a sidelink resource re-selection; or send Channel Occupancy Time (COT) information to the first user device, in which the Channel Occupancy Time (COT) information may be carried in the SCI and the field of "COT sharing indication" in the SCI is set to '1'; or reset the sidelink Consecutive DTXs counter (e.g., *numConsecutiveDTX)* to zero or another initial value; or restart a timer Tx (e.g., the timer T400 or another timer) which is (re)started after sending the RRC reconfiguration sidelink message for the associate destination ID, or reset the timer Tx to zero or another initial value (reference can be made to Embodiments 6, 7, 8, and 9).

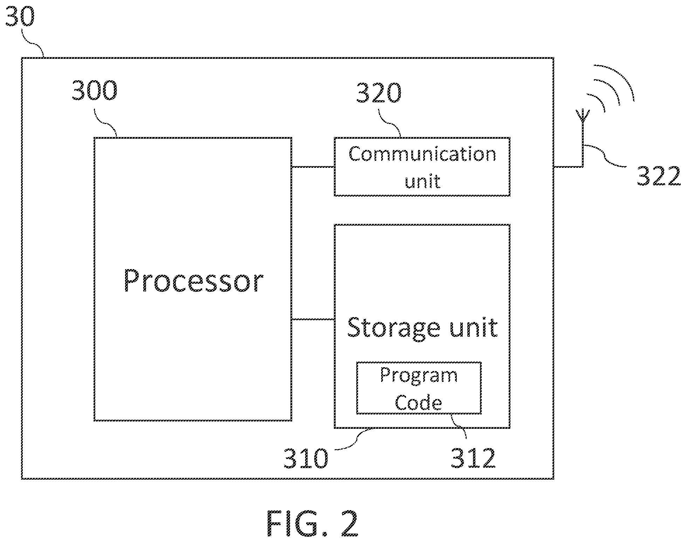

FIG. 2 relates to a diagram of a wireless communication terminal 30 according to an embodiment of the present disclosure. The wireless communication terminal 30 may be a tag, a mobile phone, a laptop, a tablet computer, an electronic book or a portable computer system and is not limited herein. The wireless communication terminal 30 may include a processor 300 such as a microprocessor or Application Specific Integrated Circuit (ASIC), a storage unit 310 and a communication unit 320. The storage unit 310 may be any data storage device that stores a program code 312, which is accessed and executed by the processor 300. Embodiments of the storage code 312 include but are not limited to a subscriber identity module (SIM), read-only memory (ROM), flash memory, random-access memory (RAM), hard-disk, and optical data storage device. The communication unit 320 may a transceiver and is used to transmit and receive signals (e.g., messages or packets) according to processing results of the processor 300. In an embodiment, the communication unit 320 transmits and receives the signals via at least one antenna 322.

In an embodiment, the storage unit 310 and the program code 312 may be omitted and the processor 300 may include a storage unit with stored program code.

The processor 300 may implement any one of the steps in exemplified embodiments on the wireless communication terminal 30, e.g., by executing the program code 312.

The communication unit 320 may be a transceiver. The communication unit 320 may as an alternative or in addition be combining a transmitting unit and a receiving unit configured to transmit and to receive, respectively, signals to and from a wireless communication node.

In some embodiments, the wireless communication terminal 30 may be used to perform the operations of the UE described above. In some embodiments, the processor 300 and the communication unit 320 collaboratively perform the operations described above. For example, the processor 300 performs operations and transmit or receive signals, message, and/or information through the communication unit 320.

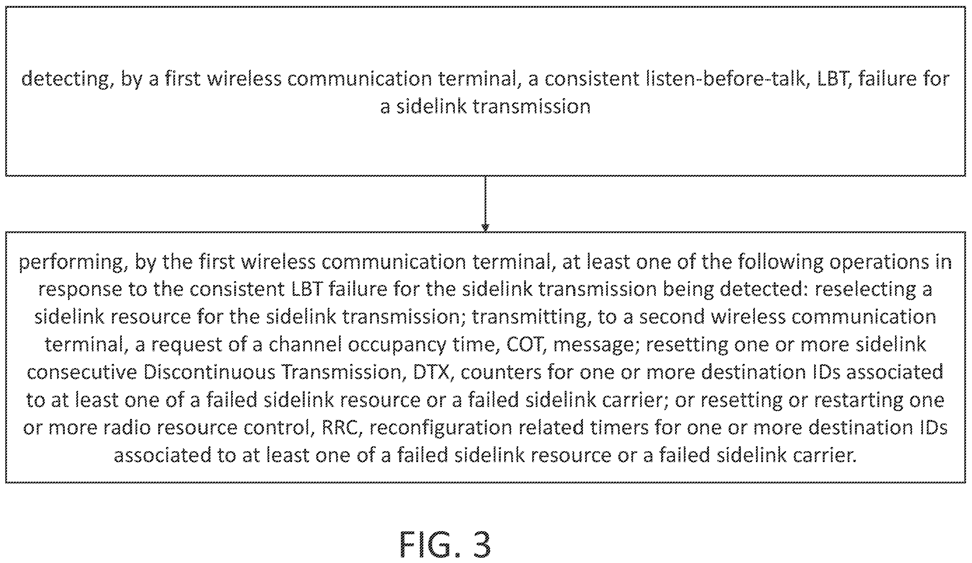

FIGs. 3 to 6 show flowcharts of wireless communication methods according to embodiments of the present disclosure.

As shown in FIG. 3, in accordance with some embodiments of the present disclosure, a wireless communication method includes: detecting, by a first wireless communication terminal (e.g., the first user device described above), a consistent listen-before-talk, LBT, failure for a sidelink transmission; and performing, by the first wireless communication terminal, at least one of the following operations in response to the consistent LBT failure for the sidelink transmission being detected: reselecting a sidelink resource for the sidelink transmission; transmitting, to a second wireless communication (e.g., the second user device described above) terminal, a request of a channel occupancy time, COT, message; resetting one or more sidelink consecutive Discontinuous Transmission, DTX, counters for one or more destination IDs associated to at least one of a failed sidelink resource or a failed sidelink carrier; or resetting or restarting one or more radio resource control, RRC, reconfiguration related timers for one or more destination IDs associated to at least one of a failed sidelink resource or a failed sidelink carrier.

In some embodiments, the consistent LBT failure may be detected on the sidelink resource or the carrier for the sidelink transmission.

In some embodiments, the sidelink transmission may be the sidelink transmission between the first wireless communication terminal and a wireless communication node (e.g., the gNB or base station described above) or between the first wireless communication terminal and another wireless communication terminal (e.g., the second wireless communication).

In some embodiments, the sidelink resource may be at least one of: a sidelink resource pool, a sidelink resource block, RB, set, or a sidelink bandwidth part, BWP, as described above.

In some embodiments, the one or more RRC reconfiguration related timers, may be the timer Tx described above.

In some embodiments, one of the one or more destination IDs may be used to identify a wireless communication terminal. The one or more destination IDs (e.g., one or more wireless communication terminals) may correspond to a certain sidelink resource or a certain sidelink carrier. For example, the one or more wireless communication terminals may use a certain sidelink resource or a certain sidelink carrier to perform a sidelink communication with the first wireless communication terminal.

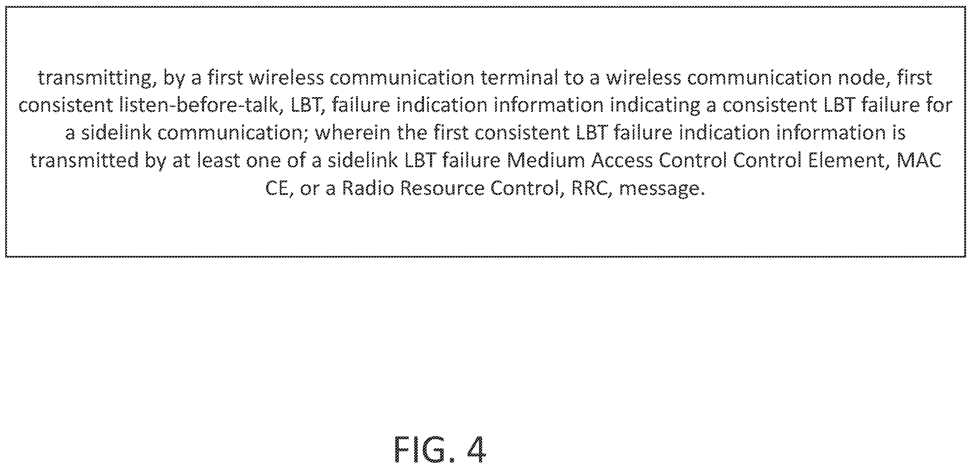

As shown in FIG. 4, in accordance with some embodiments of the present disclosure, a wireless communication method includes: transmitting, by a first wireless communication terminal (e.g., the first user device described above) to a wireless communication node (e.g., the gNB or base station described above), first consistent listen-before-talk, LBT, failure indication information indicating a consistent LBT failure for a sidelink communication; wherein the first consistent LBT failure indication information is transmitted by at least one of a sidelink LBT failure Medium Access Control Control Element, MAC CE, or a Radio Resource Control, RRC, message.

In some embodiments, the first consistent LBT failure indication information may be the consistent LBT failure indication information transmitted from the first wireless communication terminal to the gNB or base station described above.

In some embodiments, the first consistent LBT failure indication information comprises at least one of: one or more indices for one or more sidelink resource pools for which the consistent LBT failure is detected or has been triggered; one or more indices for one or more sidelink RB sets for which the consistent LBT failure is detected or has been triggered; an indication (e.g., one or more indicating fields) of the consistent LBT failure for the sidelink communication being detected for each destination ID; or an indication to indicate the consistent LBT failure for the sidelink communication being detected.

In some embodiments, the sidelink LBT failure MAC CE comprises a plurality of indicating fields, and an indicating field is set to a first value (e.g., 1) in response to the consistent LBT failure on a corresponding sidelink resource being detected, and the indicating field is set to a second value (e.g., 0) in response to the consistent LBT failure on a corresponding sidelink resource not being detected.

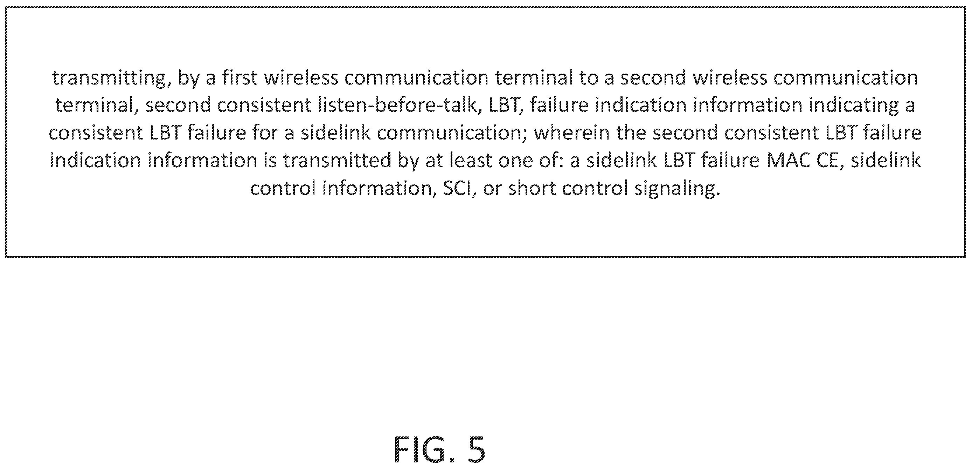

As shown in FIG. 5, in accordance with some embodiments of the present disclosure, a wireless communication method includes: transmitting, by a first wireless communication terminal (e.g., the first user device described above) to a second wireless communication terminal (e.g., the second user device described above), second consistent listen-before-talk, LBT, failure indication information indicating a consistent LBT failure for a sidelink communication; wherein the second consistent LBT failure indication information is transmitted by at least one of: a sidelink LBT failure MAC CE, sidelink control information, SCI, or short control signaling.

In some embodiments, the second consistent LBT failure indication information may be the consistent LBT failure indication information transmitted from the first wireless communication terminal to the second wireless communication terminal described above.

In some embodiments, the first wireless communication terminal transmits information (e.g., an index) of a reselected sidelink resource to the second wireless communication terminal.

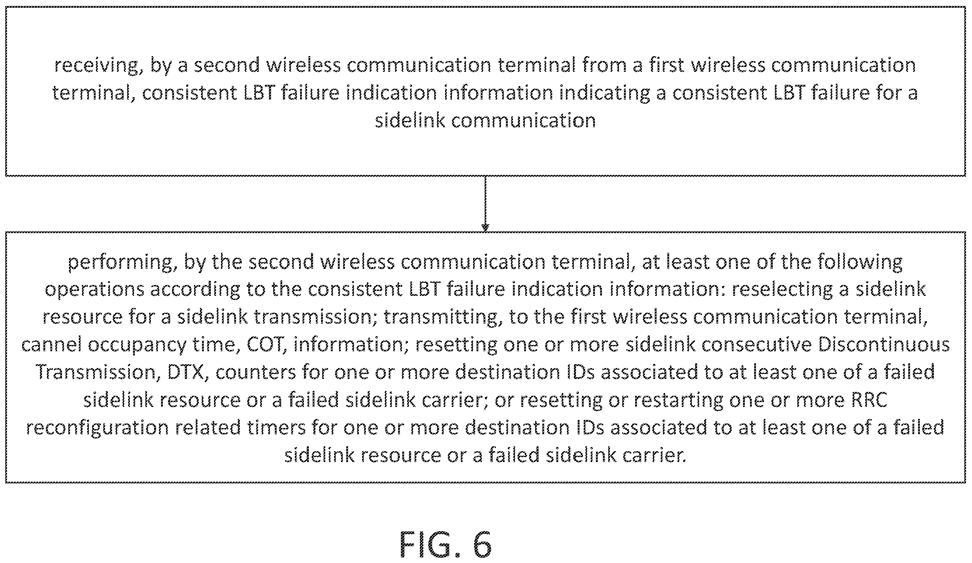

As shown in FIG. 6, in accordance with some embodiments of the present disclosure, a wireless communication method includes: receiving, by a second wireless communication terminal (e.g., the second user device described above) from a first wireless communication terminal (e.g., the first user device described above), consistent LBT failure indication information indicating a consistent LBT failure for a sidelink communication; and performing, by the second wireless communication terminal, at least one of the following operations according to the consistent LBT failure indication information: reselecting a sidelink resource for a sidelink transmission; transmitting, to the first wireless communication terminal, cannel occupancy time, COT, information; resetting one or more sidelink consecutive Discontinuous Transmission, DTX, counters for one or more destination IDs associated to at least one of a failed sidelink resource or a failed sidelink carrier; or resetting or restarting one or more RRC reconfiguration related timers for one or more destination IDs associated to at least one of a failed sidelink resource or a failed sidelink carrier.

Details of the wireless communication methods can be ascertained by referring to the embodiments described above.

Note that any combination of the wireless communication methods shown in FIGs 3 to 5 is possible. For example, the first wireless communication may detect a consistent LBT failure for a sidelink transmission, and perform at least one of the operations described in FIG. 3, and transmit the first **LBT** failure indication information to the wireless communication node, and/or transmit the second **LBT** failure indication information to the second wireless communication terminal.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of the claims. Thus, the disclosure is not intended to be limited to the implementations shown herein, but is to be accorded the widest scope consistent with the novel features and principles disclosed herein, as recited in the claims below.

## Claims

1. A wireless communication method comprising:
detecting, by a first wireless communication terminal, a consistent listen-before-talk, LBT, failure for a sidelink transmission; and
performing, by the first wireless communication terminal, at least one of the following operations in response to the consistent LBT failure for the sidelink transmission being detected:
transmitting, to a second wireless communication terminal, a request of a channel occupancy time, COT, message; or
resetting or restarting one or more radio resource control, RRC, reconfiguration related timers for one or more destination IDs associated to at least one of a failed sidelink resource or a failed sidelink carrier.

2. The wireless communication method of claim 1, wherein the sidelink resource comprises at least one of: a sidelink resource pool, a sidelink resource block, RB, set, or a sidelink bandwidth part, BWP.

3. The wireless communication method of claim 1, wherein the failed sidelink resource comprises at least one of: a sidelink resource on which the consistent LBT failure is detected, or a sidelink resource for which the consistent LBT failure have been triggered; and
wherein the failed sidelink carrier comprises at least one of: a sidelink carrier on which the consistent LBT failure is detected, or a sidelink resource for which the consistent LBT failure have been triggered.

4. The wireless communication method of any of claims 1 to 3, wherein the first wireless communication terminal reselects a sidelink resource for the sidelink transmission in response to the consistent LBT failure for the sidelink transmission being detected, and the first wireless communication terminal reselects the sidelink resource comprises at least one of: switching a sidelink resource pool from a current or source sidelink resource pool to a reselected or target sidelink resource pool; or switching a sidelink RB set from a current or source sidelink RB set to a reselected or target sidelink RB set.

5. A wireless communication method comprising:
receiving, by a second wireless communication terminal from a first wireless communication terminal, consistent LBT failure indication information indicating a consistent LBT failure for a sidelink communication; and
performing, by the second wireless communication terminal, at least one of the following operations according to the consistent LBT failure indication information:
transmitting, to the first wireless communication terminal, cannel occupancy time, COT, information; or
resetting or restarting one or more RRC reconfiguration related timers for one or more destination IDs associated to at least one of a failed sidelink resource or a failed sidelink carrier.

6. The wireless communication method of claim 5, wherein the sidelink resource comprises at least one of: a sidelink resource pool, a sidelink resource block, RB, set, or a sidelink bandwidth part, BWP.

7. The wireless communication method of claim 5, wherein the failed sidelink resource comprises at least one of: a sidelink resource on which sidelink consistent LBT failure is detected, or a sidelink resource for which sidelink consistent LBT failure have been triggered; and
wherein the failed sidelink carrier comprises at least one of: a sidelink carrier on which sidelink consistent LBT failure is detected, or a sidelink resource for which sidelink consistent LBT failure have been triggered.

8. The wireless communication method of any of claims 5 to 7, wherein the second wireless communication terminal reselects a sidelink resource for a sidelink transmission according to the consistent LBT failure indication information, and the second wireless communication terminal reselects the sidelink resource comprises at least one of: switching a sidelink resource pool from a failed sidelink resource pool to a reselected sidelink resource pool; or switching a sidelink RB set from a failed sidelink RB set to a reselected sidelink RB set.

9. The wireless communication method of any of claims 5 to 8, wherein the COT information is transmitted by SCI enabling a COT sharing function.

10. The wireless communication method of any of claims 5 to 9, wherein the second wireless communication terminal receives information of reselected sidelink resource from the first wireless communication terminal.

11. The wireless communication method of claim 10, wherein the reselected sidelink resource is received via the consistent LBT failure indication information from the first wireless communication terminal.

12. The wireless communication method of claim 10 or 11, wherein the reselected sidelink resource is received via SCI or a sidelink MAC CE or a sidelink RRC message.

13. A wireless communication terminal (30), comprising:
a communication unit (320); and
a processor (300) configured to: perform a wireless communication method of any of claims 1 to 4.

14. A wireless communication terminal (30), comprising:
a communication unit (320); and
a processor (300) configured to perform a wireless communication method of any of claims 5 to 12.

15. A computer program product comprising a computer-readable program medium code stored thereupon, the code, when executed by a processor (300), causing the processor (300) to implement a wireless communication method recited in any of claims 1 to 12.

## Patentansprüche

1. Drahtloses Kommunikationsverfahren, das aufweist:
Erkennen, durch ein erstes drahtloses Kommunikationsendgerät, eines konsistenten Listen-before-Talk-Fehlers, LBT-Fehlers, für eine Sidelink-Übertragung; und
Durchführen, durch das erste drahtlose Kommunikationsendgerät, mindestens einer der folgenden Operationen als Reaktion auf das Erkennen des konsistenten LBT-Fehlers für die Sidelink-Übertragung:
Übertragen, an ein zweites drahtloses Kommunikationsendgerät, einer Anfrage einer Kanalbelegungszeitnachricht, COT-Nachricht; oder
Zurücksetzen oder Neustarten eines oder mehrerer Zeitgeber im Zusammenhang mit einer Neukonfiguration der Funkressourcensteuerung, RRC, für eine oder mehrere Ziel-IDs, die mindestens einem von einer fehlgeschlagenen Sidelink-Ressource oder einem fehlgeschlagenen Sidelink-Träger zugeordnet sind.

2. Drahtloses Kommunikationsverfahren nach Anspruch 1, wobei die Sidelink-Ressource mindestens eines aufweist von: einem Sidelink-Ressourcenpool, einem Sidelink-Ressourcenblock-Satz, RB-Satz, oder einem Sidelink-Bandbreitenteil, BWP.

3. Drahtloses Kommunikationsverfahren nach Anspruch 1, wobei die fehlgeschlagene Sidelink-Ressource mindestens eines aufweist von: einer Sidelink-Ressource, bei der der konsistente LBT-Fehler erkannt wird, oder einer Sidelink-Ressource, für die der konsistente LBT-Fehler ausgelöst wurde; und
wobei der fehlgeschlagene Sidelink-Träger mindestens eines aufweist von: einem Sidelink-Träger, bei dem der konsistente LBT-Fehler erkannt wird, oder einer Sidelink-Ressource, für die der konsistente LBT-Fehler ausgelöst wurde.

4. Drahtloses Kommunikationsverfahren nach einem der Ansprüche 1 bis 3, wobei das erste drahtlose Kommunikationsendgerät als Reaktion auf die Erkennung des konsistenten LBT-Fehlers für die Sidelink-Übertragung eine Sidelink-Ressource für die Sidelink-Übertragung neu auswählt, und wobei die Neuwahl der Sidelink-Ressource durch das erste drahtlose Kommunikationsendgerät mindestens eines aufweist von: Umschalten eines Sidelink-Ressourcenpools von einem aktuellen oder Quell-Sidelink-Ressourcenpool auf einen neu ausgewählten oder Ziel-Sidelink-Ressourcenpool; oder Umschalten eines Sidelink-RB-Satzes von einem aktuellen oder Quell-Sidelink-RB-Satz auf einen neu ausgewählten oder Ziel-Sidelink-RB-Satz.

5. Drahtloses Kommunikationsverfahren, das aufweist:
Empfangen, durch ein zweites drahtloses Kommunikationsendgerät von einem ersten drahtlosen Kommunikationsendgerät, von Anzeigeinformationen über einen konsistenten LBT-Fehler, die einen konsistenten LBT-Fehler für eine Sidelink-Kommunikation anzeigen; und
Durchführen, durch das zweite drahtlose Kommunikationsendgerät, mindestens einer der folgenden Operationen gemäß den Anzeigeinformationen über den konsistenten LBT-Fehler:
Übertragen, an das erste drahtlose Kommunikationsendgerät, von Kanalbelegungszeitinformationen, COT-Informationen; oder
Zurücksetzen oder Neustarten eines oder mehrerer Zeitgeber im Zusammenhang mit der Neukonfiguration der RRC für eine oder mehrere Ziel-IDs, die mindestens eines von einer fehlgeschlagenen Sidelink-Ressource oder einem fehlgeschlagenen Sidelink-Träger zugeordnet sind.

6. Drahtloses Kommunikationsverfahren nach Anspruch 5, wobei die Sidelink-Ressource mindestens eines aufweist von: einem Sidelink-Ressourcenpool, einem Sidelink-Ressourcenblock-Satz, RB-Satz, oder einem Sidelink-Bandbreitenteil, BWP.

7. Drahtloses Kommunikationsverfahren nach Anspruch 5, wobei die fehlgeschlagene Sidelink-Ressource mindestens eines aufweist von: einer Sidelink-Ressource, bei der der konsistente Sidelink-LBT-Fehler erkannt wird, oder einer Sidelink-Ressource, für die der konsistente Sidelink-LBT-Fehler ausgelöst wurde; und
wobei der fehlgeschlagene Sidelink-Träger mindestens eines aufweist von: einem Sidelink-Träger, bei dem der konsistente Sidelink-LBT-Fehler erkannt wird, oder einer Sidelink-Ressource, für die der konsistente Sidelink-LBT-Fehler ausgelöst wurde.

8. Drahtloses Kommunikationsverfahren nach einem der Ansprüche 5 bis 7, wobei das zweite drahtlose Kommunikationsendgerät eine Sidelink-Ressource für eine Sidelink-Übertragung gemäß den Anzeigeinformationen über den konsistenten LBT-Fehler neu auswählt, und das Neuauswählen der Sidelink-Ressource durch das zweite drahtlose Kommunikationsendgerät mindestens eines aufweist von: Umschalten eines Sidelink-Ressourcenpools von einem fehlgeschlagenen Sidelink-Ressourcenpool auf einen neu ausgewählten Sidelink-Ressourcenpool; oder Umschalten eines Sidelink-RB-Satzes von einem fehlgeschlagenen Sidelink-RB-Satz auf einen neu ausgewählten Sidelink-RB-Satz.

9. Drahtloses Kommunikationsverfahren nach einem der Ansprüche 5 bis 8, wobei die COT-Informationen mittels SCI übertragen werden, wodurch eine COT-Sharing-Funktion ermöglicht wird.

10. Drahtloses Kommunikationsverfahren nach einem der Ansprüche 5 bis 9, wobei das zweite Drahtloskommunikationsendgerät Informationen über eine neu ausgewählte Sidelink-Ressource von dem ersten Drahtloskommunikationsendgerät empfängt.

11. Drahtloses Kommunikationsverfahren nach Anspruch 10, wobei die neu ausgewählte Sidelink-Ressource über die Anzeigeinformationen über den konsistenten LBT-Fehler von dem ersten drahtlosen Kommunikationsendgerät empfangen wird.

12. Drahtloses Kommunikationsverfahren nach Anspruch 10 oder 11, wobei die neu ausgewählte Sidelink-Ressource über SCI oder ein Sidelink-MAC-CE oder eine Sidelink-RRC-Nachricht empfangen wird.

13. Drahtloses Kommunikationsendgerät (30), aufweisend:
eine Kommunikationseinheit (320); und
einen Prozessor (300), der konfiguriert ist zum: Durchführen eines drahtlosen Kommunikationsverfahrens nach einem der Ansprüche 1 bis 4.

14. Drahtloses Kommunikationsendgerät (30), aufweisend:
eine Kommunikationseinheit (320); und
einen Prozessor (300), der konfiguriert ist zum: Durchführen eines drahtlosen Kommunikationsverfahrens nach einem der Ansprüche 5 bis 12.

15. Computerprogrammprodukt, aufweisend einen darauf gespeicherten computerlesbaren Programmmediumcode, wobei der Code, wenn er durch einen Prozessor (300) ausgeführt wird, den Prozessor (300) veranlasst, ein drahtloses Kommunikationsverfahren nach einem der Ansprüche 1 bis 12 zu implementieren.

## Revendications

1. Procédé de communication sans fil comprenant :
la détection, par un premier terminal de communication sans fil, d'un échec persistant d'écoute avant émission, LBT, pour une transmission en liaison latérale ; et
la réalisation, par le premier terminal de communication sans fil, d'au moins l'une parmi les opérations suivantes en réponse à la détection de l'échec persistant de LBT pour la transmission en liaison latérale :
la transmission, à un second terminal de communication sans fil, d'une demande de message de temps d'occupation de canal, COT ; ou
la réinitialisation ou le redémarrage d'un ou plusieurs temporisateurs liés à la reconfiguration de commande de ressource radio, RRC, pour un ou plusieurs ID de destination associés à au moins l'une parmi une ressource de liaison latérale défaillante ou une porteuse de liaison latérale défaillante.

2. Procédé de communication sans fil selon la revendication 1, dans lequel la ressource de liaison latérale comprend au moins l'un parmi : une réserve de ressources de liaison latérale, un ensemble de blocs de ressources, RB, de liaison latérale ou une partie de largeur de bande, BWP, de liaison latérale.

3. Procédé de communication sans fil selon la revendication 1, dans lequel la ressource de liaison latérale défaillante comprend au moins l'une parmi : une ressource de liaison latérale sur laquelle l'échec persistant de LBT est détecté, ou une ressource de liaison latérale pour laquelle l'échec persistant de LBT a été déclenché ; et
dans lequel la porteuse de liaison latérale défaillante comprend au moins l'une parmi : une porteuse de liaison latérale sur laquelle l'échec persistant de LBT est détecté, ou une ressource de liaison latérale pour laquelle l'échec persistant de LBT a été déclenché.

4. Procédé de communication sans fil selon l'une quelconque des revendications 1 à 3, dans lequel le premier terminal de communication sans fil resélectionne une ressource de liaison latérale pour la transmission en liaison latérale en réponse à la détection de l'échec persistant de LBT pour la transmission en liaison latérale, et la resélection de la ressource de liaison latérale par le premier terminal de communication sans fil comprend au moins l'un parmi : le basculement d'une réserve de ressources de liaison latérale d'une réserve de ressources de liaison latérale actuelle ou source vers une réserve de ressources de liaison latérale resélectionnée ou cible ; ou le basculement d'un ensemble de RB de liaison latérale d'un ensemble de RB de liaison latérale actuel ou source vers un ensemble de RB de liaison latérale resélectionné ou cible.

5. Procédé de communication sans fil comprenant :
la réception, par un second terminal de communication sans fil provenant d'un premier terminal de communication sans fil, d'informations d'indication d'échec persistant de LBT indiquant un échec persistant de LBT pour une communication en liaison latérale ; et
la réalisation, par le second terminal de communication sans fil, d'au moins l'une parmi les opérations suivantes selon les informations d'indication d'échec persistant de LBT :
la transmission, au premier terminal de communication sans fil, d'informations de temps d'occupation de canal, COT ; ou
la réinitialisation ou le redémarrage d'un ou plusieurs temporisateurs liés à la reconfiguration RRC pour un ou plusieurs ID de destination associés à au moins l'une parmi une ressource de liaison latérale défaillante ou une porteuse de liaison latérale défaillante.

6. Procédé de communication sans fil selon la revendication 5, dans lequel la ressource de liaison latérale comprend au moins l'un parmi : une réserve de ressources de liaison latérale, un ensemble de blocs de ressources, RB, de liaison latérale ou une partie de largeur de bande, BWP, de liaison latérale.

7. Procédé de communication sans fil selon la revendication 5, dans lequel la ressource de liaison latérale défaillante comprend au moins l'une parmi : une ressource de liaison latérale sur laquelle un échec persistant de LBT en liaison latérale est détecté, ou une ressource de liaison latérale pour laquelle un échec persistant de LBT en liaison latérale a été déclenché ; et
dans lequel la porteuse de liaison latérale défaillante comprend au moins l'une parmi : une porteuse de liaison latérale sur laquelle l'échec persistant de LBT en liaison latérale est détecté, ou une ressource de liaison latérale pour laquelle l'échec persistant de LBT en liaison latérale a été déclenché.

8. Procédé de communication sans fil selon l'une quelconque des revendications 5 à 7, dans lequel le second terminal de communication sans fil resélectionne une ressource de liaison latérale pour une transmission en liaison latérale selon les informations d'indication d'échec persistant de LBT, et la resélection de la ressource de liaison latérale par le second terminal de communication sans fil comprend au moins l'un parmi : le basculement d'une réserve de ressources de liaison latérale d'une réserve de ressources de liaison latérale défaillante vers une réserve de ressources de liaison latérale resélectionnée ; ou le basculement d'un ensemble de RB de liaison latérale d'un ensemble de RB de liaison latérale défaillant vers un ensemble de RB de liaison latérale resélectionné.

9. Procédé de communication sans fil selon l'une quelconque des revendications 5 à 8, dans lequel les informations de COT sont transmises par SCI activant une fonction de partage de COT.

10. Procédé de communication sans fil selon l'une quelconque des revendications 5 à 9, dans lequel le second terminal de communication sans fil reçoit des informations de ressource de liaison latérale resélectionnée depuis le premier terminal de communication sans fil.

11. Procédé de communication sans fil selon la revendication 10, dans lequel la ressource de liaison latérale resélectionnée est reçue par l'intermédiaire des informations d'indication d'échec persistant de LBT provenant du premier terminal de communication sans fil.

12. Procédé de communication sans fil selon la revendication 10 ou 11, dans lequel la ressource de liaison latérale resélectionnée est reçue par l'intermédiaire de SCI ou d'un CE MAC de liaison latérale ou d'un message RRC de liaison latérale.

13. Terminal de communication sans fil (30), comprenant :
une unité de communication (320) ; et
un processeur (300) configuré pour : réaliser un procédé de communication sans fil selon l'une quelconque des revendications 1 à 4.

14. Terminal de communication sans fil (30), comprenant :
une unité de communication (320) ; et
un processeur (300) configuré pour réaliser un procédé de communication sans fil selon l'une quelconque des revendications 5 à 12.

15. Produit-programme d'ordinateur comprenant un code de support de programme lisible par ordinateur stocké sur celui-ci, le code, lorsqu'il est exécuté par un processeur (300), amenant le processeur (300) à mettre en œuvre un procédé de communication sans fil selon l'une quelconque des revendications 1 à 12.
